(19) Europäisches Patentamt
European Patent Office
Office européen des brevets

(11) EP 2 246 693 A1

(12) EUROPÄISCHE PATENTANMELDUNG

(43) Veröffentlichungstag:
03.11.2010 Patentblatt 2010/44

(51) Int Cl.:
*G01N 21/77* (2006.01)    *G01N 33/543* (2006.01)

(21) Anmeldenummer: 09005905.6

(22) Anmeldetag: 29.04.2009

(84) Benannte Vertragsstaaten:
AT BE BG CH CY CZ DE DK EE ES FI FR GB GR
HR HU IE IS IT LI LT LU LV MC MK MT NL NO PL
PT RO SE SI SK TR
Benannte Erstreckungsstaaten:
AL BA RS

(71) Anmelder:
• Karlsruher Institut für Technologie
76131 Karlsruhe (DE)
• Christian-Albrechts-Universität zu Kiel
24118 Kiel (DE)

(72) Erfinder:
• Lemmer, Ulrich
76228 Karlsruhe (DE)
• Nazirizadeh, Yousef
65193 Wiesbaden (DE)

(74) Vertreter: Gärtner, Stephan
Karlsruher Institut für Technologie
Stabsabteilung Innovation
Postfach 36 40
76021 Karlsruhe (DE)

(54) Optisches Element, Verfahren zum Nachweis des Vorhandenseins von Substanzen und Verwendung des optischen Elements

(57) Die Erfindung betrifft ein optisches Element zum Nachweis des Vorhandenseins einer Substanz, das einen photonischen Kristall (1), dessen Hohlräume mit einem Fluidum gefüllt sind und der zwischen zwei gekreuzten Polarisationsfiltern (21, 22) angeordnet ist, enthält, wobei zumindest ein Teilbereich (11, 12, 13, 14) einer Oberfläche des photonischen Kristalls (1), die einem der beiden Polarisationsfilter (21, 22) zugewandt ist, oder der Hohlräume innerhalb von 100 nm unterhalb der Oberfläche mindestens ein Medium aufweist, dessen Brechungsindex sich zumindest nach dem Inkontakttreten mit der nachzuweisenden Substanz sowohl vom Brechungsindex des photonischen Kristalls (1) als auch vom Brechungsindex des Fluidums unterscheidet.

Die Erfindung betrifft weiterhin ein Verfahren zum Nachweis des Vorhandenseins von Substanzen mittels des optischen Elements sowie dessen Verwendung als Sensor zum Nachweis des Vorhandenseins von chemischen oder biologischen Substanzen, insbesondere von Antikörpern, Enzymen, Bakterien oder Zellen.

Mit der vorliegenden Erfindung lassen sich einfach, direkt, schnell, kostengünstig und benutzerfreundlich Substanzen nachweisen, ohne dass eine Strom- oder Spannungsversorgung erforderlich wäre. Werden Teilbereiche (11, 12, 13, 14) als Muster in Form von aussagekräftigen Symbolen ausgestaltet, so lassen sich die Sensoren auch von analphabetischen Menschen nutzen.

Fig. 1a

**Beschreibung**

Die Erfindung betrifft ein optisches Element, ein Verfahren zum Nachweis des Vorhandenseins von Substanzen mittels des optischen Elements sowie die Verwendung des optischen Elements.

Sensoren zum Nachweis von biologischen Substanzen wie z.B. Antigenen, Enzymen, Bakterien oder Zellen, lassen sich in zwei Gruppen einteilen: Sensoren, die auf der Basis von Markern (*Lables*) arbeiten, und markerfreie Sensoren. Als Marker werden häufig radioaktive oder fluoreszierende Molekülbausteine eingesetzt. Diese Marker können jedoch Experimente unerwünscht beeinflussen oder erschweren. Daher besteht ein großer Bedarf an markerfreien Sensoren.

Ivnitski, D., Abdel-Hamid, I., Atanasov, P. und Wilkins, E., Biosensors for detection of pathogenic bacteria, Biosens. Bioelectron. 14, S. 599, 1999, klassifizieren markerfreie (*labelfree*) Biosensoren in physikalischer Hinsicht in drei Gruppen:

1. Massensensitive Sensoren mit piezoelektrischen Materialien oder Cantilevern zum Nachweis des Vorhandenseins von biologischem Material;
2. Elektrochemische Sensoren, die auf der Messung des Stroms oder Widerstands eines Transducers basieren; und
3. Optische Sensoren, die die Änderung des Brechungsindex oder das Vorhandensein einer dünnen Schicht nachweisen.

Aus der US 7,094,595 B2 ist ein Sensor bekannt, der ein auf ein Substrat aufgebrachtes zweidimensionales Gitter mit einem im Vergleich zum Substrat höheren Brechungsindex sowie ein oder mehrere spezifische bindende markerfreie Substanzen umfasst, die auf der Oberfläche des Gitters immobilisiert sind, wobei die bindenden Substanzen an ebenfalls markerfreie Bindungspartner gebunden sind. Bei Beleuchtung des Biosensors zeigt sich ein resonanter Gittereffekt.

Aus der US 7,118,710 B2 ist ein Sensor bekannt, der ein auf ein Substrat aufgebrachtes zweidimensionales Gitter mit einem hohen Brechungsindex und ein oder mehrere spezifische bindende markerfreie Substanzen umfasst, die auf der Oberfläche des Gitters immobilisiert sind. Auch hier zeigt sich bei Beleuchtung des Biosensors ein resonanter Gittereffekt.

Die US 7,158,230 B2 offenbart eine Vorrichtung zum Nachweis einer reflektierten Wellenlänge von der Oberfläche eines Sensors, umfassend eine Weißlichtquelle, eine optisch mit der Lichtquelle gekoppelten erste Faser zur Beleuchtung eines Bereichs auf der Oberfläche des Sensors, eine zweite Faser zum Nachweis des von der Oberfläche reflektierten Lichts und einem Spektrometer. Nachteilig hieran ist der hohe apparative Aufwand.

In Y. Nazirizadeh, J.G. Müller, U. Geyer, D. Schelle, E.-B. Kley, A. Tünnermann, U. Lemmer und M. Gerken, Optical characterization of photonic crystal slabs using orthogonally oriented polarization filters, Optics Express 16, S. 7153-60, 2008, wird ein experimentelles Transmissions-Verfahren zum direkten Nachweis von geführten Modenresonanzen in planaren photonischen Kristallen (*photonic crystal slabs*) präsentiert. Durch die Anordnung des in Form einer Scheibe vorliegenden photonischen Kristalls zwischen zwei orthogonal zueinander orientierte Polarisationsfilter wird die Transmission des Lichts mit Ausnahme der geführten Modenresonanzen unterdrückt.

Ausgehend hiervon ist es die Aufgabe der vorliegenden Erfindung, ein optisches Element, ein Verfahren zum Nachweis des Vorhandenseins von Substanzen und eine Verwendung des optischen Elements vorzuschlagen, die die vorher genannten Nachteile und Einschränkungen nicht aufweisen.

Insbesondere soll ein optisches Element bereitgestellt werden, mit dem ohne hohen technischen Aufwand auch außerhalb eines Labors und bereits mit bloßem Auge der Nachweis des Vorhandenseins einer Substanz möglich ist.

Diese Aufgabe wird im Hinblick auf das optische Element zum Nachweis des Vorhandenseins von Substanzen durch die Merkmale des Anspruchs 1, im Hinblick auf das Verfahren zum Nachweis des Vorhandenseins von Substanzen durch die Schritte des Anspruchs 6 und im Hinblick auf die Verwendung des optischen Elements durch den Gegenstand des Anspruchs 11 gelöst. Die Unteransprüche beschreiben jeweils vorteilhafte Ausgestaltungen der Erfindung.

Ein erfindungsgemäßes optisches Element zum Nachweis des Vorhandenseins von Substanzen enthält einen photonischen Kristall, der naturgemäß Hohlräume besitzt, die mit einem Fluidum, d.h. einem Gas, insbesondere Luft, oder einer Flüssigkeit, insbesondere einer wässrigen Lösung, gefüllt sind, und der zwischen zwei gekreuzten Polarisationsfiltern angeordnet ist.

Erfindungsgemäß weist zumindest ein Teilbereich einer Oberfläche des photonischen Kristalls, die einem der beiden Polarisationsfilter zugewandt ist, und/oder der im photonischen Kristall vorhandenen Hohlräume innerhalb von 100 nm unterhalb der Oberfläche mindestens ein Medium auf, dessen Brechungsindex sich, nachdem der mindestens eine Teilbereich mit der nachzuweisenden Substanz in Kontakt tritt, sowohl vom Brechungsindex des photonischen Kristalls als auch vom Brechungsindex des Fluidums, mit dem die Hohlräume des photonischen Kristalls gefüllt sind, unterscheidet.

In einer bevorzugten Ausgestaltung sind auf der Oberfläche und/oder den Hohlräumen des photonischen Kristalls in mindestens zwei verschiedenen funktionalisierten Teilbereichen jeweils andere Medien aufgebracht, wobei sich die mindestens zwei Medien zumindest nach dem Inkontakttreten mit der nachzuweisenden Substanz in ihrem Brechungsindex unterscheiden.

In einer besonders bevorzugten Ausgestaltung weist der zumindest eine auf die beschriebene Weise funktionalisierte Teilbereich die Form eines Musters auf, das entweder mit dem Auge eines Beobachters oder mittels einer Software, die die von einer Kamera, der vorzugsweise ein Mikroskop vorgeschaltet ist, aufgenommenen Bilder auswertet, erkennbar ist.

In einer besonderen Ausgestaltung ist der zumindest eine Teilbereich mit einem chemischen oder biologischen Material als Medium versehen, dessen Brechungsindex sich, nachdem der mindestens eine Teilbereich mit der nachzuweisenden Substanz derart in Kontakt tritt, dass dort eine entsprechende Reaktion ausgelöst wird, sowohl vom Brechungsindex des photonischen Kristalls als auch vom Brechungsindex des Fluidums, mit dem die Hohlräume des photonischen Kristalls gefüllt sind, unterscheidet.

Vorzugsweise ist der zumindest eine Teilbereich derart mit einem biologischen Material versehen, dass er Antigene zu binden vermag. Der Nachweis erfolgt dadurch, dass auf der Oberfläche und/oder in den Hohlräumen des mindestens einen Teilbereichs derart Antikörper angebracht wurden, dass sie in der Lage sind, mit ihnen in Kontakt tretende Antigene zu binden.

Mit dem erfindungsgemäßen optischen Element lässt sich der Nachweis des Vorhandenseins einer Substanz durchführen.

Gemäß Verfahrensschritt a) wird zunächst ein erfindungsgemäßes optisches Element mit den oben beschriebenen Merkmalen bereitgestellt.

Anschließend wird gemäß Verfahrensschritt b) das bereitgestellte optische Element einer Substanz, deren Vorhandensein nachzuweisen ist, ausgesetzt. Hierbei ist darauf zu achten, dass die nachzuweisende Substanz so gewählt ist, dass bei Inkontakttreten mit dem mindestens einen Medium, das der photonische Kristall zumindest in Teilbereichen aufweist, eine Änderung des Brechungsindex in den Teilbereichen erfolgt.

Im sich hierzu anschließenden Verfahrensschritt c) wird das optische Element mit Licht aus einer breitbandigen Lichtquelle, vorzugsweise mit Umgebungslicht, beaufschlagt. Im Falle dass die nachzuweisende Substanz vorhanden ist, verschiebt sich dadurch die Wellenlänge desjenigen Teils des Lichts, der den mindestens einen Teilbereich durchquert hat, der das mindestens eine Medium aufweist, das mit der nachzuweisenden Substanz in Kontakt getreten ist.

Schließlich wird gemäß Verfahrensschritt d) das Spektrum des durch das optische Element transmittierten Lichts nachgewiesen. Dies erfolgt bevorzugt durch das Auge eines Beobachters, mittels einer Kamera, der vorzugsweise ein Mikroskop vorgeschaltet ist, oder mittels einer Software, die die von einer Kamera aufgenommenen Spektralbilder auswertet. Hierdurch wird ein etwaiges Vorhandensein der Substanz in dem mindestens einen Teilbereich durch eine Änderung des Spektrums festgestellt.

In einer besonderen Ausgestaltung sind mindestens zwei Teilbereiche vorhanden, die derart ausgestaltet sind, dass sich die Wellenlängen derjenigen Teile des Lichts, die unterschiedliche Teilbereiche durchqueren, um jeweils einen voneinander verschiedenen Betrag verschieben. Auf diese Weise lässt sich das Vorhandensein von mindestens zwei verschiedenen Substanzen nachweisen.

Erfindungsgemäße Elemente lassen sich einsetzen als Sensoren zum Nachweis des Vorhandenseins von Substanzen, vorzugsweise zum Nachweis von chemischen Substanzen, insbesondere toxischen oder schädlichen Stoffen, oder zum Nachweis von biologischen Substanzen, insbesondere von Antikörpern, Enzymen, Bakterien oder Zellen.

Mit der vorliegenden Erfindung lassen sich besonders vorteilhaft Substanzen mit Relevanz für das tägliche Leben nachweisen. Der Nachweis erfolgt einfach, direkt, schnell, kostengünstig und benutzerfreundlich. Insbesondere kann auf einen hohen apparativen Aufwand, vor allem eine Strom- und/oder Spannungsversorgung, verzichtet werden.

Werden die funktionalisierten Teilbereiche als Muster in Form von aussagekräftigen Symbolen ausgestaltet, so lassen sich hiermit auch optische Sensoren aufbauen, die analphabetischen Menschen die Nutzung ermöglichen.

Die Erfindung wird im Folgenden anhand von Ausführungsbeispielen und den Figuren näher erläutert:

**Figur 1** zeigt schematisch das erfindungsgemäße optische Element und das Verfahren zum Nachweis des Vorhandenseins von Substanzen unter Verwendung des optischen Elements sowie dessen Verwendung als Biosensor.

In **Figur 2** sind die Ergebnisse aus Versuchen mit den verschiedenen Zuckerlösungen mit jeweils unterschiedlichem Brechungsindex dargestellt.

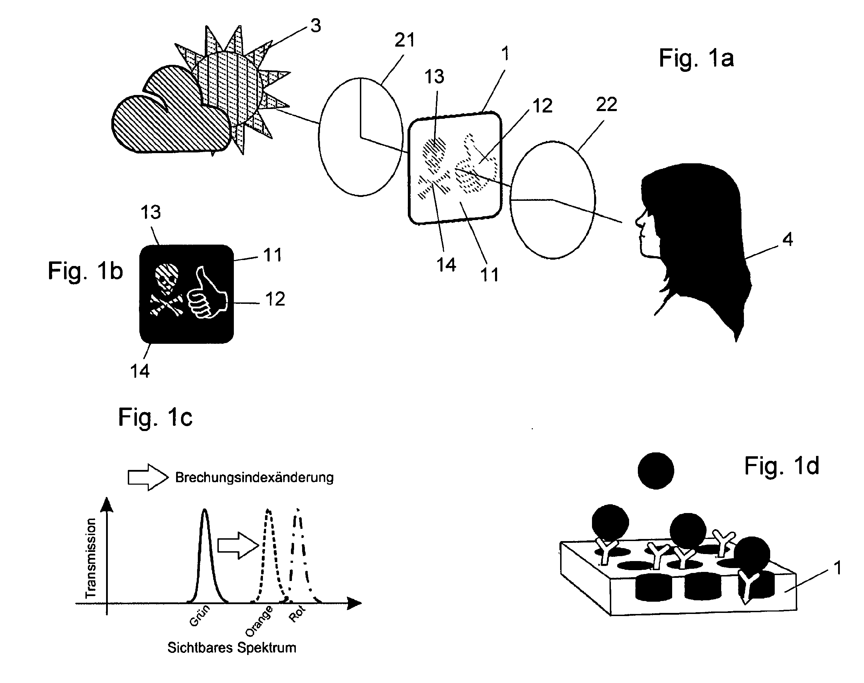

In **Fig. 1a)** ist schematisch ein optisches Element aus einem erfindungsgemäß ausgestalteten photonischen Kristall **1** mit einem Muster aus verschiedenen Teilbereichen **11, 12, 13, 14,** die sich in ihrem Brechungsindex unterscheiden, dargestellt, wobei sich der photonische Kristall **1** zwischen zwei gekreuzten Polarisationsfiltern **21, 22** befindet. Ein Beobachter **4** sieht bei Beleuchtung des optischen Elements mit Umgebungslicht **3** als Lichtquelle eine Transmission durch das optische Element.

Das Bild, das der Beobachter **4** erblickt, ist schematisch in **Fig. 1b)** dargestellt. Der Beobachter **4** kann ein Muster, das sich aus verschiedenen Teilbereichen zusammensetzt, dann durch ihre unterschiedliche Farbe erkennen, wenn sich die Teilbereiche **11, 12, 13, 14** nach Inkontakttreten mit der nachzuweisenden Substanz dadurch in ihrem Brechungsindex unterscheiden, dass die Oberfläche des photonischen Kristalls, die einem der beiden Polarisationsfilter zugewandt ist, bzw. Hohlräume innerhalb von 100 nm unterhalb dieser Oberfläche in den Teilbereichen **11, 12, 13, 14** mit entsprechend ausgewählten Medien versehen wurden. In diesem Beispiel sind die Teilbereiche **11, 12, 13, 14** als Muster in Form von aussagekräftigen Symbolen ausgestaltet, wodurch sich das optische Element auch von analphabetischen Menschen als Sensor nutzen lässt.

**Fig. 1 c)** zeigt schematisch, dass jede Änderung des Brechungsindex auf der Oberfläche des photonischen Kristalls bzw. in Hohlräumen innerhalb von 100 nm unterhalb dieser Oberfläche durch Inkontakttreten mit der nachzuweisenden Substanz eine Verschiebung der Wellenlänge der Resonanz hervorruft, die für den Beobachter **4** in einer Farbänderung resultiert. Hierbei gilt, dass mit zunehmendem Betrag der Differenz des geänderten Brechungsindex vom Brechungsindex des photonischen Kristalls bzw. des Fluidums wie z. B. Luft oder ein wässriges Medium, mit dem der photonische Kristall gefüllt ist, die Größe der Farbänderung für den Beobachter **4** zunimmt.

In einer besonderen Ausführungsform, wie in **Fig. 1d)** schematisch dargestellt, sind Teilbereiche der Oberfläche und der hieran angrenzenden Hohlräume des photonischen Kristalls so funktionalisiert, dass sie ein biologisches Material, hier Antigene, so zu binden vermögen, dass hierdurch eine Änderung des Brechungsindex und damit gemäß **Fig. 1c)** eine Farbänderung für den Beobachter **4** hervorgerufen wird.

Für die folgenden Ausführungsbeispiele wurde ein in Form einer Scheibe ausgeführter photonischer Kristall, der aus Hohlräumen in Form von Poren in einer 140 nm dicken Schicht aus $Nb_2O_5$ bestand, einen Brechungsindex von 2,3 bei einer Wellenlänge von $\lambda$ = 500 nm aufwies und der auf ein Quarzsubstrat mit einer quadratischen Geometrie aufgebracht war, eingesetzt. Die Poren besaßen eine quadratische Geometrie mit einer Seitenlänge von 380 nm, während ihre Periodizität eine Wellenlänge $\lambda$ = 500 nm auswies. Diese Struktur zeigte zum einen Resonanzen dritter Ordnung im sichtbaren Spektralbereich und war zum anderen einfach herzustellen.

Um den visuellen Eindruck des menschlichen Auges zu erfassen, wurde ein üblicher Mikroskop-Aufbau mit einem Objektiv mit 40-facher Vergrößerung gewählt. Zur Aufnahme der Farbbilder wurde eine Spiegelreflexkamera eingesetzt. Die spektralen Untersuchungen wurden in einer konfokalen Konfiguration ausgeführt.

In einem ersten Schritt wurden die refraktometrischen Eigenschaften des vorliegenden Biosensors, d.h. seine Empfindlichkeit in Bezug auf den Brechungsindex eines Fluids, nachgewiesen. Hierzu konnte die Änderung der Farbe der Transmission durch den photonischen Kristall als Funktion der Benetzung seiner Oberfläche und der hieran angrenzenden Hohlräume (Poren) mit Luft bzw. drei Lösungen mit verschiedenem Zuckergehalt beobachtet werden. Durch eine Änderung der Zuckerkonzentration ließ sich der Brechungsindex von 1,33 (Luft) bis 1,55 (höchster Zuckergehalt) einstellen.

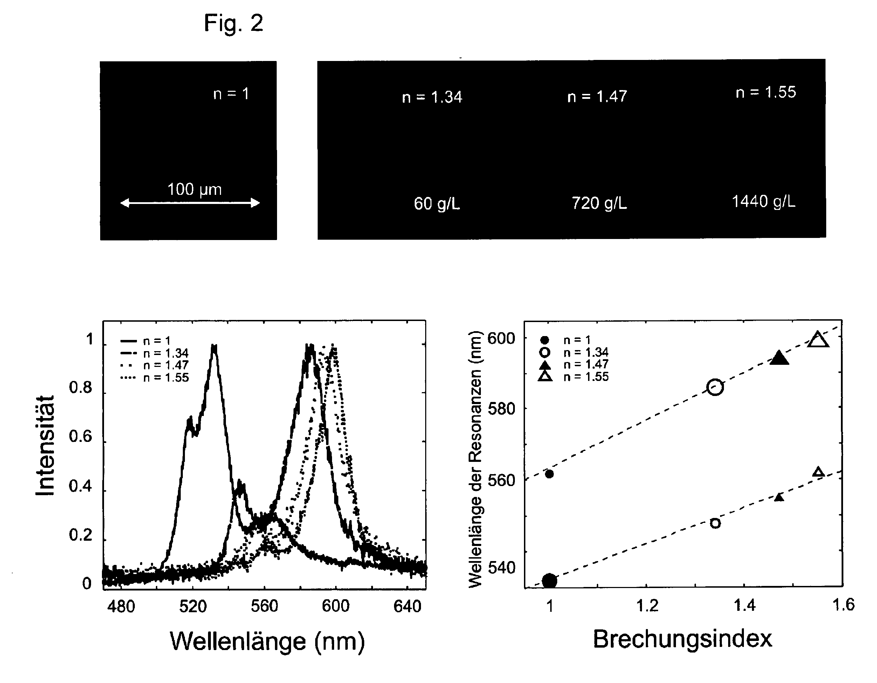

**Fig. 2a)** zeigt Transmissionsbilder des oben beschriebenen photonischen Kristalls, der nacheinander mit Luft (links) bzw. mit drei verschiedenen Zuckerlösungen gefüllt war und sich hierbei jeweils zwischen den zwei gekreuzten Polarisationsfiltern befand.

Wie in **Fig. 2b)** dargestellt, zeigte die Transmission mit Luft als Füllmaterial zwei Hauptresonanzen bei 532 nm und 562 nm, wobei die Resonanz bei 532 nm im Folgenden als 1. Mode und die Resonanz bei 562 nm als 2. Mode bezeichnet werden. Der Farbeindruck entsteht aus einer Mischung der Resonanzpositionen und -intensitäten. Im vorliegenden Fall trug die 1. Mode mit einem höheren Anteil als die 2. Mode zum Farbeindruck bei, so dass ein Beobachter das transmittierte Licht aufgrund seiner Wellenlänge als Grün erkennt. Werden nun nacheinander Zuckerlösungen mit Brechungsindizes von 1,34, 1,47 und 1,55 als Füllmaterial eingesetzt, so stellt der Beobachter einen Farbumschwung über Orange bis hin zu Rot als Funktion des zunehmenden Brechungsindex der o. g. drei Zuckerlösungen fest.

Aus der Analyse der Spektren lassen sich zwei verschiedene Effekte erkennen, die für die Farbänderung verantwortlich sind, zum einen eine Resonanzverschiebung aufgrund der Bragg-Bedingung und zum anderen die Neuverteilung der Intensitäten der beiden Moden.

In **Fig. 2c)** sind hierzu die Verschiebungen der Wellenlängen der beiden Resonanzmaxima mit zunehmendem Brechungsindex dargestellt. Hierbei stellen die größeren Punkte die Resonanzen höherer Intensität und die kleineren Punkte die Resonanzen geringerer Intensität dar. Die gestrichelte Linie ist die jeweils berechnete Bragg-Bedingung 3. Ordnung. Die Resonanzmaxima ergeben sich aus der Bragg-Bedingung gemäß

$$\lambda_{res1,2} = 2\frac{\Lambda}{m}n_{eff}$$

$$n_{eff} = a_{enviro.}n + a_{Nb_2O_5}n_{Nb_2O_5} + a_{sub.}n_{sub.}$$

(1)

wobei $\lambda$ die Periodizität des photonischen Kristalls und m die Ordnung der Bragg-Bedingung ist. $n_{eff}$ wird berechnet aus der Summe der beitragenden Brechungsindizes und ihrem Mitwirkung an jeder Mode. Die Positionen der Resonanzen der beiden Moden folgen, wie in **Fig. 2c)** dargestellt, der Bragg-Bedingung 3. Ordnung. Die verschiedenen Resonanzpositionen sind eine Folge der unterschiedlichen $n_{eff}$ für diese Moden. Aus den jeweiligen Steigungen der gestrichelten Geraden in **Fig. 2c)** wurden Sensitivitäten $\Delta\lambda/\Delta n$ in Höhe von 55 nm/RIU (*refractive index unit,* Brechungsindexeinheit) für die 1. Mode bzw. von 68 nm/RIU für die 2. Mode ermittelt.

Schließlich wurde die Fähigkeit des erfindungsgemäßen optischen Elements getestet, biologisches Material durch Infiltration des photonischen Kristalls mit menschlichen Mundschleimautzellen nachzuweisen. Um die Zellen in Teilbereiche auf und unter der Oberfläche des photonischen Kristalls einzubringen, wurde eine wässrige Lösung, die die Zellen enthielt, auf die Oberfläche des photonischen Kristalls aufgebracht, wobei die Zellen nach dem Austrocknen der wässrigen Lösung auf der Oberfläche und in den angrenzenden Poren des photonischen Kristalls verblieben.

Der Brechungsindex einer menschlichen Hautzelle beträgt ca. 1,45 und ist damit vergleichbar mit den oben untersuchten Zuckerlösungen. Die Farbe der Transmission durch den photonischen Kristall, der sich zwischen zwei gekreuzten Polarisationsfiltern befand und der in Teilbereichen die Hautzellen enthielt, zeigte sich im Einklang mit den obigen Ergebnissen aus den Untersuchungen an Zuckerlösungen als orange bis rot. Dies legt umgekehrt nahe, dass die Teilbereiche der Oberfläche sowie der in den photonischen Kristall eingebrachten Poren mit Hautzellen gefüllt waren.

## Patentansprüche

1. Optisches Element zum Nachweis des Vorhandenseins einer Substanz, enthaltend einen photonischen Kristall (1), dessen Hohlräume mit einem Fluidum gefüllt sind und der zwischen zwei gekreuzten Polarisationsfiltern (21, 22) angeordnet ist, **dadurch gekennzeichnet, dass** zumindest ein Teilbereich (11, 12, 13, 14) einer Oberfläche des photonischen Kristalls (1), die einem der beiden Polarisationsfilter (21, 22) zugewandt ist, und/oder mindestens der Hohlräume innerhalb von 100 nm unterhalb der Oberfläche des photonischen Kristalls (1) mindestens ein Medium aufweist, dessen Brechungsindex sich zumindest nach dem Inkontakttreten mit der nachzuweisenden Substanz sowohl vom Brechungsindex des photonischen Kristalls (1) als auch vom Brechungsindex des Fluidums unterscheidet.

2. Optisches Element nach Anspruch 1, **dadurch gekennzeichnet, dass** die Oberfläche und/oder die Hohlräume des photonischen Kristalls (1) in mindestens zwei verschiedenen Teilbereichen (11, 12, 13, 14) jeweils ein Medium aufweist, wobei sich die mindestens zwei Medien voneinander in ihrem Brechungsindex unterscheiden.

3. Optisches Element nach Anspruch 1 oder 2, **dadurch gekennzeichnet, dass** der zumindest eine Teilbereich (11, 12, 13, 14) die Form eines mit dem menschlichen Auge erkennbaren Musters aufweist.

4. Optisches Element nach einem der Ansprüche 1 bis 3, **dadurch gekennzeichnet, dass** der zumindest eine Teilbereich (11, 12, 13, 14) mit einem Medium in Form eines chemischen oder biologischen Materials funktionalisiert ist.

5. Optisches Element nach Anspruch 4, **dadurch gekennzeichnet, dass** der zumindest eine Teilbereich (11, 12, 13, 14) derart mit einem biologischen Material versehen, dass er Antigene zu binden vermag.

6. Verfahren zum Nachweis des Vorhandenseins einer Substanz mit den Schritten

   a) Bereitstellen eines optischen Elements nach einem der Ansprüche 1 bis 5,
   b) Aussetzen des optischen Elements einer Substanz, deren Vorhandensein nachzuweisen ist, wobei die Substanz so gewählt ist, dass durch Inkontakttreten mit dem mindestens einen Medium, das der photonische Kristall (1) zumindest in Teilbereichen (11, 12, 13, 14) aufweist, eine Änderung des Brechungsindex in den Teilbereichen (11, 12, 13, 14) bewirkt wird,
   c) Beaufschlagen des optischen Elements mit Licht aus einer breitbandigen Lichtquelle, wodurch sich bei Vorhandensein der Substanz die Wellenlänge desjenigen Teils des Lichts verschiebt, der den mindestens einen Teilbereich (11, 12, 13, 14), der das mindestens eine Medium aufweist, durchquert,
   d) Nachweisen des Spektrums des durch das optische Element transmittierten Lichts, wodurch das etwaige Vorhandensein der Substanz in dem mindestens einen Teilbereich (11, 12, 13, 14) durch eine Änderung des Spektrums festgestellt wird.

7. Verfahren nach Anspruch 6, wobei das optische Element derart mindestens zwei Teilbereiche (11, 12, 13, 14) aufweist, dass sich die Wellenlängen derjenigen Teile des Lichts, die unterschiedliche Teilbereiche (11, 12, 13, 14) durchqueren, um jeweils einen voneinander verschiedenen Betrag verschieben.

8. Verfahren nach Anspruch 6 oder 7, wobei Umgebungslicht (3) als breitbandige Lichtquelle eingesetzt wird.

9. Verfahren nach einem der Ansprüche 6 bis 8, wobei der Nachweis des Spektrums des durch das optische Element transmittierten Lichts gemäß Schritt c) durch das Auge eines Beobachters (4) erfolgt.

10. Verfahren nach einem der Ansprüche 6 bis 8, wobei der Nachweis des Spektrums des durch das optische Element transmittierten Lichts gemäß Schritt c) mittels einer Kamera oder mittels einer Software, die das von einer Kamera aufgenommene Spektrum auswertet, erfolgt.

11. Verwendung eines optischen Elements nach einem der Ansprüche 1 bis 5 als Sensor zum Nachweis des Vorhandenseins von chemischen oder biologischen Substanzen.

12. Verwendung eines optischen Elements nach Anspruch 11 zum Nachweis des Vorhandenseins von Antikörpern, Enzymen, Bakterien oder Zellen.

Fig. 1a

Fig. 1b

Fig. 1c

Fig. 1d

Fig. 2

EP 2 246 693 A1

**Europäisches Patentamt**
**European Patent Office**
**Office européen des brevets**

## EUROPÄISCHER RECHERCHENBERICHT

Nummer der Anmeldung

EP 09 00 5905

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2006/188398 A1 (YANO KOJI [JP]; IMAMURA TAKESHI [JP]; SUGITA MITSURO [JP]; OKAMOTO KOH) 24. August 2006 (2006-08-24)<br>* Absatz [0076] - Absatz [0082] *<br>* Absatz [0110] *<br>* Absatz [0112] *<br>* Abbildungen 5a,5b,11,19a,19b *<br>* Absatz [0092] *<br>* Absatz [0125] - Absatz [0127] *<br>* Absatz [0129] *<br>----- | 1-12 | INV.<br>G01N21/77<br>G01N33/543 |
| Y,D | NAZIRIZADEH Y ET AL: "Optical characterization of photonic crystal slabs using orthogonally oriented polarization filters"<br>OPTICS EXPRESS,<br>Bd. 16, Nr. 10, 12. Mai 2008 (2008-05-12),<br>Seiten 7153-7160, XP2543945<br>OSA (Optical Society of America)<br>ISSN: 1094-4087<br>* Seite 7155, Absatz 2 - Seite 7157,<br>Absatz 1 *<br>* Abbildungen 1a,2 *<br>----- | 1-12 | |

RECHERCHIERTE SACHGEBIETE (IPC)

G01N

Der vorliegende Recherchenbericht wurde für alle Patentansprüche erstellt

| Recherchenort | Abschlußdatum der Recherche | Prüfer |
|---|---|---|
| Den Haag | 8. September 2009 | Krametz, Edeltraud |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 00 5905

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-09-2009

| Im Recherchenbericht angeführtes Patentdokument | Datum der Veröffentlichung | Mitglied(er) der Patentfamilie | Datum der Veröffentlichung |
|---|---|---|---|
| US 2006188398 A1 | 24-08-2006 | WO 2005022129 A1<br>JP 2005099007 A | 10-03-2005<br>14-04-2005 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

**In der Beschreibung aufgeführte Patentdokumente**

- US 7094595 B2
- US 7118710 B2
- US 7158230 B2

**In der Beschreibung aufgeführte Nicht-Patentliteratur**

- **Ivnitski, D. ; Abdel-Hamid, I. ; Atanasov, P. ; Wilkins, E.** Biosensors for detection of pathogenic bacteria. *Biosens. Bioelectron.,* 1999, vol. 14, 599
- **Y. Nazirizadeh ; J.G. Müller ; U. Geyer ; D. Schelle ; E.-B. Kley ; A. Tünnermann ; U. Lemmer ; M. Gerken.** Optical characterization of photonic crystal slabs using orthogonally oriented polarization filters. *Optics Express,* 2008, vol. 16, 7153-60